# EUROPÄISCHE PATENTSCHRIFT

(11) **EP 1 886 959 B1**
(45) Veröffentlichungstag und Bekanntmachung des Hinweises auf die Patenterteilung: **09.06.2010**
(21) Anmeldenummer: 07113881.2
(22) Anmeldetag: 06.08.2007
(51) Int. Cl.: B66B 7/06, F16G 5/06, D07B 1/22, B29D 29/10

(54) **Aufzugtragmittel für ein Aufzugsystem, Aufzugsystem mit einem solchen Aufzugtragmittel und Verfahren zur Montage eines solchen Aufzugsystems**
Load-bearing mechanism for a lift system, lift system with such a load-bearing mechanism and method for assembly of such a lift system
Moyen de support d'élévation pour un système d'élévation, système d'élévation doté d'un tel moyen d'élévation et procédé de montage d'un tel système d'élévation

(30) Priorität: 11.08.2006 EP 06118824; 22.12.2006 EP 06127168
(43) Veröffentlichungstag der Anmeldung: 13.02.2008
(73) Patentinhaber: Inventio AG, 6052 Hergiswil (CH)
(72) Erfinder: Ach, Ernst, 6030 Ebikon (CH); Bonnard, Luc, 6052 Hergiswil (CH)

(56) Entgegenhaltungen:
- EP-A- 1 674 419
- EP-A1- 0 596 713
- EP-A1- 1 555 234
- EP-A2- 0 249 404
- EP-A2- 0 694 710
- EP-A2- 1 063 448
- EP-A2- 1 396 458
- WO-A-92/22757
- WO-A-94/09288
- DE-A1- 10 003 972
- DE-U1- 8 516 604
- US-A- 3 404 577
- US-A- 4 781 664
- US-A- 5 447 476

## Beschreibung

Die vorliegende Erfindung betrifft ein Aufzugtragmittel für ein Aufzugsystem, ein Aufzugsystem mit einem solchen Aufzugtragmittel und ein Verfahren zur Montage eines solchen Aufzugsystems.

In einem Aufzugsystem übertragen ein oder mehrere Aufzugtragmittel Kräfte von einem Antrieb auf eine in einem Aufzugsschacht oder entlang freistehender Führungsschienen verfahrbare Kabine. Über das- bzw. dieselben oder weitere Aufzugtragmittel kann die Kabine mit einem Ausgleichs- oder Gegengewicht gekoppelt sein, das entgegengesetzt zur Kabine verfährt.

Aus der EP 1 446 348 B1 ist ein solches Aufzugsystem mit einem Aufzugtragmittel bekannt. In einem Ausführungsbeispiel weist das Aufzugtragmittel auf einer Treibseite zum Eingriff mit einem Treibrad fünf keilrippenförmige Treibrippen und auf einer der Treibseite gegenüberliegenden Umlenkseite zum Eingriff mit einem Umlenkrad eine ebenfalls keilrippenförmige Führungsrippe auf. Führungs- und Treibrippen greifen in entsprechende keilförmige Rillen ein, die auf Umlenk- bzw. Treibrädern ausgebildet sind.

Ein weiteres Aufzugsystem mit einem Flachriemen, der Rippen auf der Treibseite and der Führungsseite aufweist, ist aus der EP 1396458 A2 bekannt. Weitere Transmissionsriemen, die beispielweise im Automobilbereich verwendet werden, sind in den Patentdokumenten EP 0596713 A1, EP 0249404 A2 und US 4,781,664 gezeigt.

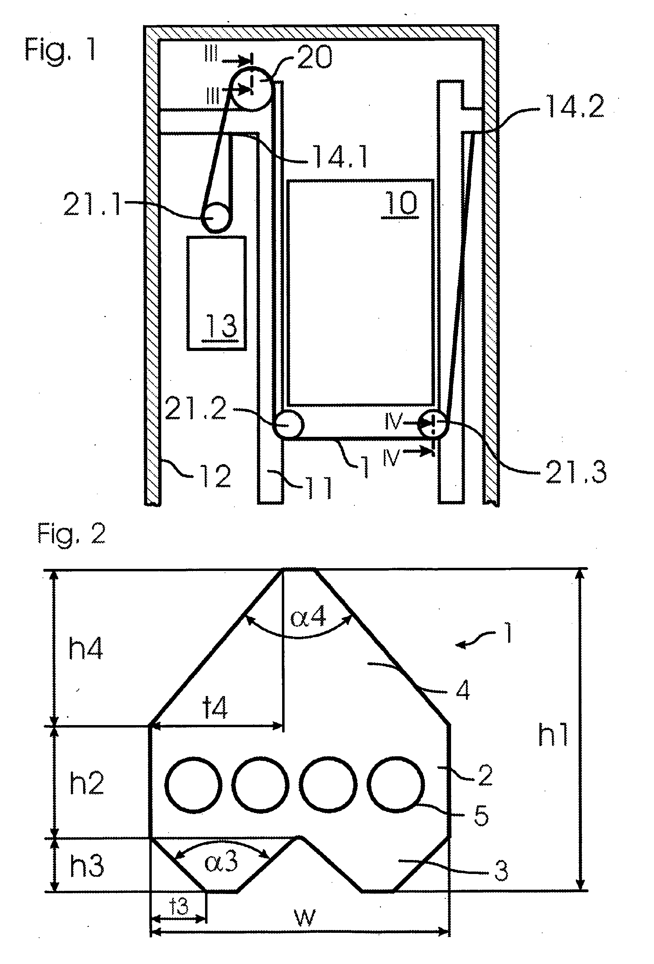

Eine Rippe weist allgemein zwei einander gegenüberliegende Flanken auf, die einen Flankenwinkel α einschliessen, wie dies in Fig. 2 schematisch angedeutet ist. Bei einer Keilrippe sind diese Flanken allgemein gegeneinander geneigt, bei einer Rechteckrippe parallel zueinander mit einem Flankenwinkel α = 0°. Als Flankenbreite t wird vorliegend die Projektion der Flanke auf die von der Längs- und Querrichtung des Aufzugtragmittels aufgespannte Ebene bezeichnet. Sie ist beispielsweise bei einer Rechteckrippe gleich null und beträgt bei einer Keilrippe mit einer Flankenlänge f der schrägen Flanke allgemein t = f × *sin*(α/2)*.* Als Flankenhöhe h wird dementsprechend die Projektion der Flanke auf die Median- oder Längsebene des Grundkörpers bezeichnet. Sie entspricht beispielsweise bei einer Rechteckrippe der Flankenlänge f und beträgt bei einer Keilrippe allgemein h = f × *cos*(α/2).

Die keilrippenförmigen Treibrippen erhöhen bei gleicher Zugkraft im Aufzugtragmittel aufgrund der Keilwirkung die auf die Flanken der Treibrippen wirkenden Normalkräfte und damit die Treibfähigkeit des Antriebs. Zusätzlich führen sie vorteilhaft das Aufzugtragmittel in Querrichtung auf dem Treibrad.

Die rückseitige Führungsrippe führt das Aufzugtragmittel in Querrichtung auf Umlenkrädern, über die das Aufzugmittel umgelenkt wird, um beispielsweise mit der Kabine, oder dem Gegengewicht zusammenzuwirken.

Es hat sich als günstig herausgestellt, die Zugträgeranordnung nicht zu weit entfernt und in möglichst gleichbleibendem Abstand von der Treibseite bzw. den Flanken der Treibrippen entfernt anzuordnen, um eine homogenere Kraftverteilung in den Treibrippen darzustellen. Dies resultiert in Treibrippen mit geringerer Flankenhöhe und -breite sowie einem flacheren Flankenwinkel.

Das Aufzugtragmittel liegt in der Regel von oben auf einem Treibrad des Aufzugsystems auf, so dass es durch sein Eigengewicht in die Rillen im Treibradumfang zurückgestellt wird. Umgekehrt umschlingt es Umlenkräder häufig seitlich oder von unten, so dass sein Eigengewicht es nicht zurückstellt oder sogar aus den Rillen im Umlenkradumfang herausdrückt. Tritt nun, beispielsweise aufgrund von Trägheiten der Kabine oder des Gegengewichts oder Schwingungen im Aufzugtragmittel, eine Erschlaffung des Aufzugtragmittels auf, kann dies dazu führen, dass eine Führungsrippe vollständig aus der zugehörigen Rille im Umlenkrad herausgleitet. Ohne die damit entfallende Querführung auf dem Umlenkrad bewirkt ein im Aufzugsystem aufgrund von Montagetoleranzen, Verdrillungen des Lasttrums und dergleichen meist vorhandener Schrägzug, dass das Aufzugtragmittel dann in Querrichtung aus seiner Sollposition abwandert und die Führungsrippe auch, wenn das Aufzugtragmittel sich wieder spannt, nicht mehr in die Rille im Umlenkrad zurückfindet.

Das Aufzugtragmittel umschlingt in der Regel ein Treibrad des Aufzugsystems mit einem grösseren Umschlingungswinkel als Umlenkräder, um beim Treibrad entsprechend der Euler-Eytelweinschen Formel ein Rutschen des Aufzugtragmittels zu verhindern. Dementsprechend greift eine Treibrippe häufig über einen grösseren Winkelbereich in ein Treibrad ein als eine Führungsrippe in ein Umlenkrad. Zusätzlich sind bei einem Umlenkrad mit geringerem Umschlingungswinkel die Kräfte in Radialrichtung, die die Rippe in die Rille am Radumfang zwingen, geringer als bei dem Treibrad mit grösserem Umschlingungswinkel. Umschlingt beispielsweise das Aufzugtragmittel ein Treibrad um 180°, ein Umlenkrad hingegen nur mit 90°, so ist die resultierende Radialkraft auf das Aufzugtragmittel am Treibrad um den Faktor √2 grösser als am Umlenkrad.

Weiterhin tritt zwischen benachbarten Umlenkrädern häufig ein beispielsweise durch Montagetoleranzen bedingter stärkerer Schräglauf des Aufzugtragmittels auf. Dieser kann zudem aufgrund der häufig geringeren Abstände zwischen benachbarten Umlenkrädern auch nicht ausreichend durch Verformung des Aufzugtragmittels ausgeglichen werden. Der daraus resultierende Schrägzug versucht, das Aufzugtragmittel auf den Umlenkrädern in Querrichtung zu verschieben.

Aufgabe der vorliegenden Erfindung ist es daher, die Führung eines Aufzugtragmittels auf seiner Umlenkseite zu verbessern.

Diese Aufgabe wird durch ein Aufzugtragmittel nach wenigstens einer Alternative des Anspruchs 1 gelöst. Anspruch 19 stellt ein Aufzugsystem mit einem solchen Aufzugtragmittel unter Schutz, Anspruch 22 ein Montageverfahren für ein solches Aufzugsystem.

Ein erfindungsgemässes Aufzugtragmittel umfasst einen Grundkörper, eine Treibseite, die zum reibschlüssigen Eingriff mit einem Treibrad eines Aufzugsystems vorgesehen ist und wenigstens eine Treibrippe aufweist, und eine Umlenkseite, die der Treibseite gegenüberliegt, zum Kontakt mit einem Umlenkrad des Aufzugsystems vorgesehen ist und wenigstens eine Führungsrippe aufweist. Zur Übertragung der Zugkräfte ist in dem Grundkörper eine Zugträgeranordnung angeordnet.

Wenn nachfolgend auf wenigstens eine Treibrippe oder wenigstens eine Führungsrippe Bezug genommen wird, können dabei stets gleichermassen auch mehrere Treibrippen bzw. Führungsrippen umfasst sein, wobei ein für wenigstens eine Treib- bzw. Führungsrippe definiertes Merkmal dann für wenigstens eine dieser mehreren Treib- bzw. Führungsrippen, bevorzugt für mehrere Treib- und/oder Führungsrippen, besonders bevorzugt für alle Treib- und/oder Führungsrippen des Aufzugtragmittels zutrifft.

Nach einer ersten Ausführung der vorliegenden Erfindung weist nun wenigstens eine, bevorzugt jede Führungsrippe eine grössere Flankenhöhe auf als wenigstens eine, bevorzugt jede Treibrippe. Dies gewährleistet eine bessere Führung des Aufzugtragmittels in Querrichtung.

Die Flankenhöhe bestimmt die radiale Verschiebung, die das Aufzugtragmittel gegenüber einem Treib- oder Umlenkrad erfahren darf, bevor die Rippe zur Gänze aus einer zugeordneten Rille im Aussenumfang des Treib- oder Umlenkrad austritt und das Aufzugtragmittel nicht mehr in Querrichtung führen kann.

Durch die Verlängerung der Flankenhöhe der Führungsrippen gegenüber den Treibrippen können die einleitend dargestellten Effekte teilweise kompensiert und gleichzeitig eine homogenere Kraftverteilung zwischen der Treibseite und der Zugträgeranordnung realisiert werden.

Die höhere Führungsrippe kann sich bei einem mikro- oder makroskopischen Erschlaffen des Aufzugtragmittels radial weiter von einem Umlenkrad entfernen, ohne die Querführung vollständig zu verlieren. Spannt sich das Aufzugtragmittel wieder, kann die aufgrund ihrer grösseren Flankenhöhe immer noch teilweise in die Rille des Umlenkrades eintauchende Führungsrippe vorteilhafterweise das Aufzugtragmittel wieder auf der Umlenkrolle zentrieren. Zusätzlich erhöht sich die in der Rille im Umlenkradumfang eingreifende Flankenfläche der Führungsrippe und kann so auch bei geringeren Umlenkwinkeln eine ausreichende Querführung gewährleisten. Bevorzugt kann daher mit einem Aufzugtragmittel nach der ersten Ausführung der vorliegenden Erfindung auch ein grösserer Schrägzug bis zu 4% realisiert werden kann.

Durch die im Vergleich niedrigere Treibrippe kann gleichzeitig die Abstandsänderung und/oder der maximale Abstand der Zugträger zur Treibseite verringert werden, so dass eine homogenere Kraftverteilung in der Treibrippe erzielt wird.

Bevorzugt beträgt das Verhältnis der Flankenhöhe wenigstens einer, bevorzugt jeder Führungsrippe zur Flankenhöhe wenigstens einer, bevorzugt jeder Treibrippe wenigstens 1,5, bevorzugt wenigstens 2,0 und besonders bevorzugt wenigstens 2,5. Ein Verhältnis von wenigstens 1,5 kann beispielsweise ausreichen, um die Verschlechterung der Führung auf einem Umlenkrad aufgrund eines geringeren Umschlingungswinkels zu kompensieren. Ein Verhältnis von wenigstens 2,0 kann beispielsweise vorteilhaft sein, um die Verschlechterung der Führung auf einem Umlenkrad aufgrund des Eigengewichts zu kompensieren, das das Aufzugtragmittel nicht auf das Umlenkrad zurück- oder gar von diesem wegstellt. Ein Verhältnis von wenigstens 2,5 kann beispielsweise vorteilhaft sein, um einen grösseren Schrägzug zu ermöglichen.

Zusätzlich oder alternativ zu der grösseren Flankenhöhe kann wenigstens eine, bevorzugt jede Führungsrippe eine grössere Flankenbreite aufweisen als wenigstens eine, bevorzugt jede Treibrippe. Auch dies gewährleistet eine bessere Führung des Aufzugtragmittels in Querrichtung.

Die Flankenbreite bestimmt den Versatz in Querrichtung, mit dem eine Rippe in eine Rille einlaufen bzw. aus dieser auslaufen kann und dennoch selbsttätig in die Rille zurückgeführt wird, mit anderen Worten den "Fangbereich", innerhalb dessen eine Rippe von einer Rille eines Treib- oder Umlenkrades noch eingefangen wird. Indem erfindungsgemäss die Flankenbreite der Führungsrippe grösser als die Flankenbreite der Treibrippe ist, die Führungsrippe also in Querrichtung breiter ist, kann in der schmaleren Treibrippe aufgrund des resultierenden geringeren Abstandes der Zugträger zu der Treibseite eine homogenere Kraftverteilung in der Treibrippe dargestellt werden, während das Aufzugtragmittel bei der Umlenkung über ein Umlenkrad aufgrund der breiteren Führungsrippe gleichzeitig besser geführt wird.

Dies kann ebenfalls die vorstehend erläuterten Effekte eines aufgrund seines Eigengewichts bzw. eines geringeren Umschlingungswinkels auf der Umlenkseite schlechter geführten und/oder eines stärkerem Schrägzug ausgesetzten Aufzugtragmittels teilweise kompensieren. Bei einem mikro- oder makroskopischen Erschlaffen des Aufzugtragmittels kann sich die breitere Führungsrippe in Querrichtung stärker auf einem Umlenkrad verschieben, ohne die Querführung vollständig zu verlieren. Spannt sich das Aufzugtragmittel wieder, kann die aufgrund ihrer grösseren Flankenbreite immer noch teilweise über der Rille des Umlenkrades liegende Führungsrippe vorteilhafterweise das Aufzugtragmittel wieder auf der Umlenkrolle zentrieren. Zusätzlich erhöht sich die in der Rille im Umlenkradumfang eingreifende Flankenfläche der Führungsrippe und kann so auch bei geringeren Umlenkwinkeln eine ausreichende Querführung gewährleisten. Damit kann mit einem Aufzugtragmittel, bei dem die Führungsrippe eine grössere Flankenbreite aufweist als die Treibrippe, ebenfalls ein grösserer Schrägzug realisiert werden kann.

Bevorzugt beträgt das Verhältnis der Flankenbreite wenigstens einer, bevorzugt jeder Führungsrippe zur Flankenbreite wenigstens einer, bevorzugt jeder Treibrippe wenigstens 1,5, bevorzugt wenigstens 1,75 und besonders bevorzugt wenigstens 2,0. Ein Verhältnis von wenigstens 1,5 kann beispielsweise ausreichen, um die Verschlechterung der Führung auf einem Umlenkrad aufgrund eines geringeren Umschlingungswinkels zu kompensieren. Ein Verhältnis von wenigstens 1,75 kann beispielsweise vorteilhaft sein, um die Verschlechterung der Führung auf einem Umlenkrad aufgrund des Eigengewichts zu kompensieren, das das Aufzugtragmittel nicht auf das Umlenkrad zurück- oder gar von diesem wegstellt. Ein Verhältnis von wenigstens 2,0 kann beispielsweise vorteilhaft sein, um einen grösseren Schrägzug zu ermöglichen.

Die vorstehend erläuterten Vorteile einer grösseren Flankenhöhe bzw. Flankenbreite der Führungsrippe im Vergleich zur Treibrippe ergeben sich bereits eigenständig. Bevorzugt sind jedoch beide Merkmale miteinander kombiniert, so dass die höhere und breitere Führungsrippe sich sowohl in radialer als auch in axialer Richtung weiter verschieben kann und trotzdem durch die Führungsrippe auf dem Umlenkrad geführt, insbesondere zentriert wird. Hierdurch kann auf dem Umlenkrad ein grösserer Schrägzug realisiert werden, während sich gleichzeitig die aufgrund der niedrigeren, schmäleren Treibrippen homogenere Kraftverteilung einstellt.

Nach einer zweiten Ausführung der vorliegenden Erfindung ist zusätzlich oder alternativ zu dem Verhältnis der Flankenhöhe und/oder -breite wenigstens einer Führungsrippe zu wenigstens einer Treibrippe vorgesehen, dass das Verhältnis der Flankenhöhe wenigstens einer, bevorzugt jeder Führungsrippe zur Breite des Aufzugtragmittels wenigstens 0,4, bevorzugt wenigstens 0,45 und besonders bevorzugt wenigstens 0,5 beträgt.

Je breiter das Aufzugtragmittel ausgebildet ist, desto mehr träge Masse drängt bei einer mikro- oder makroskopischen Erschlaffung von einem Umlenkrad fort. Breitere Aufzugtragmittel lassen aufgrund ihres Flächenträgheitsmomentes auch stärkere Querkräfte bzw. einen stärkeren Schrägzug zu, was ebenfalls eine bessere Führung auf dem Umlenkrad erfordert. In Versuchen hat sich nun herausgestellt, dass mit den oben genannten Verhältnissen zwischen Führungsrippenhöhe und Aufzugtragmittelbreite eine sehr gute Führung des Aufzugtragmittels auf einem Umlenkrad erzielt werden kann. Dabei kann ein Verhältnis von wenigstens 0,4 beispielsweise ausreichen, um die Verschlechterung der Führung auf einem Umlenkrad aufgrund eines geringeren Umschlingungswinkels zu kompensieren. Ein Verhältnis von wenigstens 0,45 kann beispielsweise vorteilhaft sein, um die Verschlechterung der Führung auf einem Umlenkrad aufgrund des Eigengewichts zu kompensieren, das das Aufzugtragmittel nicht auf das Umlenkrad zurück- oder gar von diesem wegstellt. Ein Verhältnis von wenigstens 0,5 kann beispielsweise vorteilhaft sein, um einen grösseren Schrägzug zu ermöglichen.

Das Verhältnis der Flankenhöhe wenigstens einer Führungsrippe zur Breite des Aufzugtragmittels nach der zweiten Ausführung der vorliegenden Erfindung kann unabhängig von dem Verhältnis der Flankenhöhe bzw. Flankenbreite der Führungsrippe im Vergleich zu einer Treibrippe gemäss der ersten Ausführung realisiert werden. Beispielsweise können sich die vorstehend erläuterten Vorteile auch bei hohen und breiten Treibrippen ergeben, bei denen Flankenhöhe und/oder -breite von Treib- und Führungsrippen im Wesentlichen gleich sind. Bevorzugt sind beide Ausführungen jedoch miteinander kombiniert, so dass sowohl die homogenere Kraftverteilung in den kürzeren und/oder schmaleren Treibrippen als auch die besseren Führungseigenschaften der hohen und/oder breiten Führungsrippen erreicht wird, wobei die Führungsrippen der Breite des Aufzugtragmittels angepasst sind.

Nach einer dritten Ausführung der vorliegenden Erfindung ist zusätzlich oder alternativ zu dem Verhältnis der Flankenhöhe und/oder -breite einer Führungsrippe zu einer Treibrippe nach der ersten Ausführung und/oder zusätzlich oder alternativ zu dem Verhältnis der Flankenhöhe einer Führungsrippe zur Breite des Aufzugtragmittels nach der zweiten Ausführung wenigstens eine, bevorzugt jede Treibrippe und wenigstens eine, bevorzugt jede Führungsrippe als Keilrippe mit einem Flankenwinkel ausgebildet, wobei der Flankenwinkel wenigstens einer, bevorzugt jeder Treibrippe grösser als der Flankenwinkel wenigstens einer, bevorzugt jeder Führungsrippe ist.

Spitzere Führungsrippen verbessern die Querführung des Aufzugtragmittels auf dessen Umlenkseite und können so beispielsweise die vorstehend erläuterten Effekte aufgrund des Eigengewichts, eines geringeren Umschlingungswinkels und/oder des grösseren Schrägzuges besser kompensieren. Insbesondere können so im Verhältnis zur Rippengrundfläche grössere Eintauchtiefen dargestellt werden, ohne das Aufzugtragmittel insgesamt zu verbreitern. Auf der anderen Seite führen stumpfere Treibrippen zu einer homogeneren Kraftverteilung im Aufzugtragmittel, da der Abstand der einzelnen Zugträger zur Treibseite gleichmässiger wird und sich auch der maximale Abstand verringert.

Das Verhältnis der Flankenwinkel nach der dritten Ausführung der vorliegenden Erfindung kann unabhängig von den Merkmalen der ersten oder zweiten Ausführung realisiert werden. Beispielsweise können sich die vorstehend erläuterten Vorteile auch bei kürzeren oder schmäleren Führungsrippen ergeben, bei denen die Eintauchtiefe dennoch in Bezug auf ihre Grundfläche durch den spitzeren Flankenwinkel vergrössert ist. Bevorzugt ist die dritte Ausführung jedoch mit der ersten und/oder zweiten Ausführung kombiniert, so dass die vorteilhafte grössere Flankenhöhe der Führungsrippe sich auch aufgrund des spitzeren Flankenwinkels ergibt.

Für eine als Keilrippe ausgebildete Treibrippe hat sich ein Flankenwinkel zwischen 60° und 120°, bevorzugt zwischen 80° und 100° und besonders bevorzugt im Wesentlichen gleich 90° als vorteilhaft erwiesen, um so einerseits eine ausreichende Keilwirkung und damit Erhöhung der Normalkraft zu erreichen und andererseits eine zu hohe Flächenpressung, damit verbundene Materialbelastung und Geräuschentwicklung und ein Verklemmen des Aufzugtragmittels zu verhindern.

Für eine als Keilrippe ausgebildete Führungsrippe hat sich ein Flankenwinkel zwischen 60° und 100°, bevorzugt zwischen 70° und 90° und besonders bevorzugt im Wesentlichen gleich 80° als günstig herausgestellt, um einerseits eine ausreichender Führung in einer Rille eines Umlenkrades zu gewährleisten und andererseits zu hohe Flächepressungen und die damit verbundene Beanspruchung des Aufzugtragmittels sowie auftretende Geräuschentwicklung zu vermeiden.

Nach einer vierten Ausführung der vorliegenden Erfindung ist zusätzlich oder alternativ zu der Flankenhöhe und/oder -breite der Führungsrippe nach der ersten und/oder zweiten Ausführung und/oder zusätzlich oder alternativ zu dem Flankenwinkel der Führungsrippe nach der dritten Ausführung vorgesehen, dass einer, zwei oder drei Treibrippen je eine Führungsrippe zugeordnet ist.

Die Querführung auf einem Umlenkrad ist insbesondere vorteilhaft, um ein Abwandern des Aufzugtragmittels aufgrund von Schrägzug zu verhindern, der beispielsweise durch einen Schräglauf des Aufzugtragmittels zwischen einem Treib- und einem Umlenkrad resultieren kann. Der mögliche Schrägzug zwischen einem Treibrad und einem Umlenkrad wird unter anderem von der Anzahl der das Aufzugtragmittel auf dem Treibrad führenden Treibrippen begrenzt. In Versuchen hat sich herausgestellt, dass mit einer Führungsrippe pro maximal drei, bevorzugt maximal zwei und besonders bevorzugt einer Treibrippe eine besonders zuverlässige Führung des Aufzugtragmittels sichergestellt werden kann. Zudem verringert sich vorteilhaft der Hebelarm zwischen äusseren Treibrippen und der zugeordneten Führungsrippe und damit das auf das Aufzugtragmittel wirkende Drehmoment, das aus den Komponenten der auf die schrägen Flanken wirkenden Kräfte senkrecht zur Flankenbreite resultiert.

Vorteilhafterweise ist die vierte Ausführung mit der ersten, zweiten und/oder dritten Ausführung der vorliegenden Erfindung kombiniert. Insbesondere, wenn nach der ersten bzw. zweiten Ausführung eine im Verhältnis zur Treibrippe bzw. der Aufzugtragmittelbreite hohe und/oder breite und nach der dritten Ausführung spitze Führungsrippe ausgebildet ist, stellen sich bei einem Treib- zu Führungsrippenverhältnis von maximal 3:1 von günstige Führungs- und Hebelverhältnisse ein.

Bevorzugt ist eine Führungsrippe zwischen zwei benachbarten Treibrippen zentriert. Dann greift die Resultierende der Flächenlast auf einer Flanke der Führungsrippe statisch stabil zwischen den beiden Angriffspunkten der Resultierenden der Flächenlasten auf den Flanken der Treibrippen an. Zudem kann das Aufzugtragmittel auf diese Weise besonders schlank ausgebildet werden.

Nach einer Ausführung der vorliegenden Erfindung beträgt das Verhältnis der Breite des Aufzugtragmittels zur Höhe des Aufzugtragmittels höchstens 0,95, bevorzugt höchstens 0,93 und besonders bevorzugt höchstens 0,91.

Damit lassen sich insbesondere relativ spitze und/oder hohe Führungsrippen darstellen, die aufgrund ihrer Flankenhöhe eine gute Querführung des Aufzugtragmittels gewährleisten.

Vorteilhafterweise weist ein solches schlankes Aufzugtragmittel in Querrichtung auch ein grösseres Flächenträgheitsmoment auf ist und somit bezüglich Biegung um die Querachse steifer als Flachriemen. Ein solches Aufzugtragmittel erfährt daher bei der Umlenkung um ein Treib- oder Umlenkrad eine höhere Vorspannung zurück in die gerade, unverformte Lage. Diese Vorspannung wirkt einem Verklemmen von Treib- oder Führungsrippen des Aufzugtragmittels in zugeordneten Rillen auf einem Treib- bzw. Umlenkrad entgegen und reduziert damit vorteilhaft die Gefahr eines Verklemmen.

Ein weiterer Vorteil liegt in dem zusätzlichen Volumen des Aufzugtragmittels in Richtung seiner Höhe. Dieses zusätzliche Volumen dämpft vorteilhaft Schwingungen und baut Stösse ab, was den Lauf eines solchen Riemens vergleichmässigt.

Die Übertragung der Umfangskraft zwischen Zugträgern und Treibrad geschieht unter kurzzeitiger Schubverformung des Aufzugtragmittels. Die dabei auftretenden Wechselverformungen führen auf lange Sicht zu einer Zerrüttung des Aufzugtragmittels und limitieren damit dessen Lebensdauer. Auch hier kann vorteilhaft das zusätzliche Volumen des Aufzugtragmittels in Richtung seiner Höhe einerseits die Schubverformungen reduzieren und andererseits dabei entstehende Wärme über das grössere Volumen und insbesondere über die grössere Oberfläche besser abführen.

Bevorzugt weist die Treibseite eines Aufzugtragmittels nach der vorliegenden Erfindung höchstens drei, bevorzugt genau zwei Treibrippen und die Umlenkseite genau eine Führungsrippe auf. Ein solches Aufzugtragmittel kann schlank ausgebildet werden und so die vorstehend erläuterten Vorteile realisieren.

Wie vorstehend erläutert, ist es vorteilhaft, jedem Zugträger eine oder zwei Flanken einer Treibrippe zuzuordnen, um eine homogenere Kraftverteilung zu erzielen. Hierzu ist es also vorteilhaft, einer Treibrippe einen oder zwei Zugträger zuzuordnen. Weist die Treibseite nur zwei oder drei Treibrippen auf, so ergibt sich damit eine Zugträgeranordnung von zwei (zwei Treibrippen mit je einem zugeordneten Zugträger) bis maximal sechs (drei Treibrippen mit je zwei zugeordneten Zugträgern) Zugträgern. Werden nun zur Erfüllung unterschiedlicher Zugkraftanforderungen mehrere Aufzugtragmittel parallel geschaltet, so erhöhen Aufzugtragmittel mit nur zwei oder drei Treibrippen daher deutlich die Modularität. Denn die vom Verbund paralleler Aufzugtragmittel übertragbare Zugkraft kann so deutlich feiner abgestuft und den jeweiligen Erfordernissen angepasst werden.

Die Flanken wenigstens einer, bevorzugt jeder Treibrippe und/oder wenigstens einer, bevorzugt jeder Führungsrippe können eben ausgebildet sein. Dies erleichtert die Herstellung und bewirkt vorteilhaft eine Selbstzentrierung der Rippe in einer zugeordneten Rille aufgrund der Schräge. Gleichermassen können die Flanken beispielsweise wenigstens einer, bevorzugt jeder Führungsrippe auch konkav ausgebildet sein, um Material zu sparen und gleichzeitig eine grosse Flankenhöhe und/oder Flankenbreite zu erzielen. Ebenso können die Flanken beispielsweise wenigstens einer, bevorzugt jeder Führungsrippe konvex ausgebildet sein, um Opfermaterial zur Verfügung zu stellen und so die Lebensdauer des Aufzugtragmittels zu erhöhen.

Nach einer Ausführung der vorliegenden Erfindung ist die minimale Breite einer oder mehrerer Treibrippen grösser als die minimale Breite der zugeordneten Rillen eines Treibrades. Hierdurch kann gewährleistet werden, dass die distalen Flankenbereiche der Treibrippen stets vollständig auf entsprechenden Gegenflanken der zugeordneten Rillen aufliegen, die sich unterhalb der vollständig eingetauchten Treibrippe noch weiter verjüngen.

Somit üben diese Gegenflanken in ihrem Rillengrund keine Kerbwirkung auf die Treibrippen aus.

Bevorzugt ist zwischen zwei benachbarten Treibrippen eine Rille mit einem Radius ausgebildet, wobei das Verhältnis dieses Radius' zu einem Radius, der an der Spitze einer zugeordneten Rippe eines Treibrades des Aufzugsystems ausgebildet ist, kleiner 1, bevorzugt kleiner 0,75 und besonders bevorzugt kleiner 0,5 ist. Hierdurch kann gewährleistet werden, dass die zwischen den beiden benachbarten Treibrippen eingreifende Rippe des Treibrades auf die proximalen Flankenbereiche der Treibrippen keine oder nur eine geringe Kerbwirkung ausübt.

Der Grundkörper, eine oder mehrere Treibrippen und/oder eine oder mehrere Führungsrippen können ein- oder mehrstückig aus einem Elastomer, insbesondere Polyurethan (PU), Polychloropren (CR), Naturkautschuk und/oder Ethylen-Propylen-Dien-Kautschuk (EPDM) ausgebildet sein. Diese Materialien sind für die Umsetzung der auf die Treibseite wirkenden Reibkräfte in Zugkräfte in den Zugträgern besonders geeignet und dämpfen zudem vorteilhaft Schwingungen des Aufzugtragmittels. Zum Schutz gegen Abrieb und dynamische Zerstörung kann die Treib- und/oder Umlenkseite eine oder mehrere Umhüllungen, beispielsweise aus Textilgewebe, aufweisen.

Eine einteilige Ausbildung ergibt ein besonders kompaktes, homogenes Aufzugtragmittel. Ist umgekehrt eine Gruppe von einer oder mehreren Treibrippen mehrstückig mit einer Gruppe von einer oder mehreren Führungsrippen ausgebildet, indem das Aufzugtragmittel beispielsweise zweiteilig aus einem Teil, der die Treibrippen umfasst, und einem damit verbundenen Teil aufgebaut ist, der die Führungsrippen aufweist, können auf Treib- und Umlenkseite unterschiedliche Materialeigenschaften dargestellt werden. Beispielsweise kann die Treibseite eine geringere Härte, insbesondere eine geringere Shore-Härte und/oder einen grösseren Reibwert als die Umlenkseite aufweisen, um eine bessere Treibfähigkeit zu erzielen, während umgekehrt der geringere Reibwert der Umlenkseite den Energieverlust bei der Umlenkung reduziert.

Insbesondere zu diesem Zweck kann die Treibseite und/oder die Umlenkseite zusätzlich oder alternativ eine Beschichtung aufweisen, deren Reibwert, Härte und/oder Abriebfestigkeit sich von dem Grundkörper unterscheidet. Alternativ zur Beschichtung kann auch eine Bedampfung oder eine Beflockung vorgesehen sein.

Durch die mehrteilige Ausbildung von Treib- und Führungsrippe und/oder die Beschichtung von Treib- und/oder Umlenkseite kann ein Aufzugtragmittel nach der vorliegenden Erfindung bevorzugt Reibwerte von µ = 0,2 bis 0,6 auf der Treibseite und/oder µ kleiner oder gleich 0,3 auf der Umlenkseite aufweisen.

Bei dem erfindungsgemäßen Aufzutragmittel ist die Entfernung der Zugträgeranordnung zur Treibseite geringer ist als zur Umlenkseite. Hierdurch kann eine homogenere Kraftverteilung in der Treibrippe und zugleich eine besser Führung des Aufzugtragmittels auf der Umlenkseite kombiniert werden. Als Entfernung kann dabei beispielsweise die maximale Entfernung eines Zugträgers zu einer Flanke, dessen mittlere Entfernung und/oder die Entfernung des Zugträgers zum Kraftangriffspunkt der Resultierenden der Flächenlast auf die Flanke definiert sein.

Der Durchmesser der Zugträger liegt bevorzugt im Bereich von 1,5 bis 4 mm. Solche Zugträger weisen eine ausreichende Biegbarkeit um Treib- und Umlenkräder und andererseits eine ausreichende Festigkeit auf und lassen sich gut im Grundkörper einbetten.

Nach einer Ausführung der vorliegenden Erfindung umfasst jeder Zugträger der Zugträgeranordnung eine zweilagige Kernlitze mit einem Kerndraht und zwei um diesen geschlagenen Drahtlagen, und um die Kernlitze angeordnete einlagige Aussenlitzen mit einem Kerndraht und einer um diesen geschlagenen Drahtlage. Ein solcher Zugträgeraufbau, der beispielsweise eine Kernlitze mit 1+6+12 Stahldrähten und acht Aussenlitzen mit 1+6 Stahldrähten aufweisen kann, hat sich in Versuchen als vorteilhaft bezüglich der Festigkeit, der Herstellbarkeit und der Biegbarkeit erwiesen.

Vorteilhafterweise weisen dabei die zwei Drahtlagen der Kernlitze denselben Schlagwinkel auf, während die eine Drahtlage der Aussenlitzen entgegen der Schlagrichtung der Kernlitze geschlagen ist, und die Aussenlitzen entgegen der Schlagrichtung ihrer eigenen Drahtlage um die Kernlitze geschlagen sind. Der Zugträger hat damit die Ordnung SSZS oder ZZSZ. Dies verringert die Dehnung der Litzen.

Wie vorstehend ausgeführt, ist ein modularer Aufbau eines Aufzugtragmittelverbundes aus mehreren Aufzugtragmitteln nach der vorliegenden Erfindung günstig, um verschiedene Zugkraftanforderungen darzustellen. Dabei werden die Aufzugtragmittel parallel auf Treib- und Umlenkrad geführt.

Hierbei können zwei Aufzugtragmittel durch einen Spalt voneinander beabstandet sein. Dies vereinfacht die Montage und gestattet geringfügige Verformungen der einzelnen Aufzugtragmittel, ohne dass diese aneinander reiben oder sich gegenseitig aus den Rillen des Treib- oder Umlenkrades herausarbeiten. Vorteilhafterweise beträgt zu diesem Zweck der Spalt wenigstens 3%, bevorzugt wenigstens 4% und besonders bevorzugt wenigstens 5% der Breite der Aufzugtragmittel.

Zur Montage können Aufzugtragmittel aus einem Vorprodukt hergestellt werden, wobei das Vorprodukt aus zwei oder mehr Aufzugtragmitteln mit einstückigem Grundkörper besteht. Das Vorprodukt wird zwischen Treibrippen und/oder Führungsrippen teilweise aufgetrennt, so dass derart weitgehend vereinzelte Aufzugstragmittel über mindestens einen dünnen Grundkörper-Steg verbunden bleiben, bevor sie im Aufzugsystem montiert werden. Dies erleichtert deren Handhabung und die lagerichtige Anordnung auf Treib- und Umlenkrad. Alternativ ist es zur Montage möglich, zwei oder mehr Aufzugtragmittel dauerhaft oder lösbar mit einem Montageband zu verbinden, bevor sie im Aufzugsystem montiert werden.

Ein Treibrad und/oder ein Umlenkrad eines Aufzugsystems nach einer Ausführung der vorliegenden Erfindung weist für jede Treib- bzw. Führungsrippe eine zugeordnete Rille derart auf, dass bei eingelegtem Aufzugtragmittel die Flanken der Treib- bzw. Führungsrippe entsprechende Gegenflanken der zugeordneten Rille berühren. Hierbei sind bevorzugt die Rillen entsprechend der Rippen des Aufzugtragmittels ausgebildet: weist die Führungsrippe bzw. die Treibrippe eine bestimmte Flankenhöhe, Flankenbreite, und/oder einen bestimmten Flankenwinkel auf, so weisen vorteilhafterweise die Gegenflanken der zugeordneten Rille im Wesentlichen dieselbe Flankenhöhe und/oder Flankenbreite und/oder im Wesentlichen denselben Flankenwinkel auf. Insbesondere ist es zu bevorzugen, dass die Eintauchtiefe, mit der wenigstens eine, bevorzugt jede Führungsrippe eines Aufzugtragmittels nach der vorliegenden Erfindung in eine Rille in einem Umlenkrad eintaucht, grösser ist als die Eintauchtiefe, mit der wenigstens eine, bevorzugt jede Treibrippe in eine Rille in einem Treibrad eintaucht. Mit anderen Worten, bevorzugt ist wenigstens eine, bevorzugt jede Rille in einem Umlenkrad so ausgebildet, dass die Projektion der Kontaktfläche zwischen einer Flanke einer in dieser Rille angeordneten Führungsrippe und der entsprechenden Gegenflanke dieser Rille in axialer und/oder radialer Richtung grösser ist als die entsprechende Projektion der Kontaktfläche zwischen einer Flanke wenigstens einer, bevorzugt jeder Treibrippe und der entsprechenden Gegenflanke einer dieser Treibrippe zugeordneten Rille im Treibrad.

Das Treibrad oder die Treibräder können mehrere Treibzonen aufweisen, die von dem bzw. den Aufzugtragmitteln zumindest teilweise umschlungen werden. Vorteilhafterweise umschlingt ein Aufzugtragmittel ein Treibrad mit einem Umschlingungswinkel von 180°, vorzugsweise kleiner 180°, bevorzugt kleiner 150°, besonders bevorzugt kleiner 120° und insbesondere 90°.

Aufgrund der kleinen möglichen Biegeradien des Aufzugtragmittels ist es möglich, den Antrieb mit einer separaten Treibscheibe zu verbinden oder aber Treibzonen in eine Abtriebswelle des Antriebs zu integrieren. Treibscheiben und mit Treibzonen versehene Abtriebswellen werden daher einheitlich als Treibrad angesprochen. Vorteilhafterweise ist der Durchmesser eines Treibrades kleiner oder gleich 220mm, vorzugsweise kleiner 180mm, vorzugsweise kleiner 140mm, vorzugsweise kleiner 100mm, vorzugsweise kleiner 90mm, vorzugsweise kleiner 80mm. Die Zugkräfte werden von dem Treibrad reib- und/oder formschlüssig in die Riemen einleiten.

Ein Aufzugtragmittel kann als endlicher Riemen ausgebildet sein, dessen Enden an Riemenschlössern befestigt sind. Der Riemen kann insbesondere bei schwierigen Umlenkverhältnissen beispielsweise durch Öffnungen geführt oder auf nicht fliegende gelagerte Riemenräder aufgelegt werden.

Weitere Aufgaben, Merkmale und Vorteile ergeben sich aus den Unteransprüchen und den nachfolgend beschriebenen Ausführungsbeispiele. Hierzu zeigt, teilweise schematisiert:
- Fig. 1: einen Schnitt durch ein Aufzugsystem nach einer Ausführung der vorliegenden Erfindung;
- Fig. 2: ein Aufzugtragmittel nach einer Ausführung der vorliegenden Erfindung zur Erläuterung von Massangaben;
- Fig. 3: einen Teilschnitt durch ein Aufzugtragmittel des Aufzugsystems aus Fig. 1 entlang der Linie III-III;
- Fig. 4: einen Teilschnitt durch ein Aufzugtragmittel des Aufzugsystems aus Fig. 1 entlang der Linie IV-IV,
- Fig. 5: ein Vorprodukt des Aufzugtragmittels aus Fig. 2,
- Fig. 6: eine Ausführung eines Verbunds von Aufzugtragmitteln aus Fig. 2, hergestellt aus dem Vorprodukt aus Fig. 5, und
- Fig. 7: eine weitere Ausführung eines Verbunds von Aufzugtragmittels aus Fig. 2.

Fig. 1 zeigt einen Schnitt durch ein in einem Aufzugsschacht 12 installiertes Aufzugssystem nach einer Ausführung der vorliegenden Erfindung. Dieses umfasst einen in dem Aufzugsschacht 12 fixierten Antrieb mit einem Treibrad 20, eine an Kabinenführungsschienen 11 geführte Aufzugskabine 10 mit zwei unterhalb des Kabinenbodens angebrachten Umlenkrädern in Form von Kabinentragrollen 21.2, 21.3, ein Gegengewicht 13 mit einem weiteren Umlenkrad in Form einer Gegengewichtstragrolle 21.1, und mehrere als Keilrippenriemen 1 ausgebildete Aufzugtragmittel für die Aufzugskabine 10 und das Gegengewicht 13, die die Antriebskraft von dem Treibrad 20 der Antriebseinheit auf die Aufzugskabine und das Gegengewicht übertragen.

Jeder Keilrippenriemen 1 ist an einem seiner Enden unterhalb des Treibrades 20 an einem ersten Riemenfixpunkt 14.1 befestigt. Von diesem aus erstreckt er sich abwärts bis zu der Gegengewichtstragrolle 21.1, umschlingt diese und erstreckt sich von dieser aus zum Treibrad 20, umschlingt dieses und verläuft entlang der gegengewichtsseitigen Kabinenwand abwärts, umschlingt auf beiden Seiten der Aufzugskabine je eine unterhalb der Aufzugskabine 10 angebrachte Kabinentragrolle 21.2 bzw. 21.3 um jeweils etwa 90° und verläuft entlang der dem Gegengewicht 13 abgewandten Kabinenwand aufwärts zu einem zweiten Riemenfixpunkt 14.2.

Die Ebene des Treibrades 20 kann rechtwinklig zur gegengewichtsseitigen Kabinenwand angeordnet sein und ihre Vertikalprojektion ausserhalb der Vertikalprojektion der Aufzugskabine 10 liegen. Es ist daher zu bevorzugen, dass das Treibrad einen geringen Durchmesser von kleiner oder gleich 220mm, vorzugsweise kleiner 180mm, vorzugsweise kleiner 140mm, vorzugsweise kleiner 100mm, vorzugsweise kleiner 90mm, vorzugsweise kleiner 80mm aufweist, damit der Abstand zwischen der gegengewichtsseitigen Kabinenwand und der dieser gegenüber liegenden Wand des Aufzugsschachts 12 möglichst klein sein kann. Ausserdem ermöglicht ein geringer Durchmesser des Treibrades 20 die Verwendung eines getriebelosen Antriebsmotors mit relativ geringem Antriebsdrehmoment als Antriebseinheit. Die Riemenfixpunkte 14 sind dem Fachmann bekannte Vorrichtungen, bei denen der Keilrippenriemen 1 zwischen einem Keil und einem Gehäuse geklemmt wird.

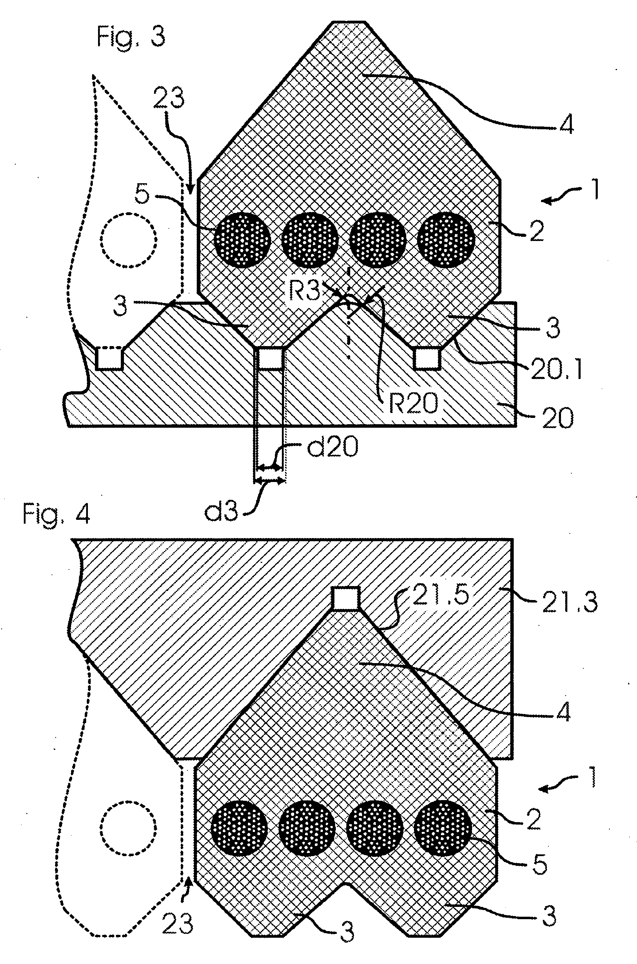

Die Figuren 3 und 4 zeigen einen Schnitt durch ein Aufzugtragmittel in Form eines Keilrippenriemens 1 aus Fig. 1 nach einer Ausführung der vorliegenden Erfindung. Dieser weist einen Grundkörper 2 auf, in dem eine Zugträgeranordnung 5 aus vier Zugträgern angeordnet ist. Wie in den Figuren angedeutet, ist jeder Zugträger als Stahldrahtseil ausgeführt, das eine zweilagige Kernlitze mit einem Kerndraht mit 0,19 mm Durchmesser, einer darum im S-Schlag geschlagenen Drahtlage aus 6 Drähten mit 0,17 mm Durchmesser und einer darum ebenfalls im S-Schlag geschlagenen Drahtlage aus 12 Drähten mit 0,17 mm Durchmesser sowie 8 einlagigen Aussenlitzen mit einem Kerndraht mit 0,17 mm Durchmesser und einer darum im Z-Schlag geschlagenen Drahtlage aus 6 Drähten mit 0,155 mm Durchmesser umfasst, die im S-Schlag um die Kernlitze geschlagen sind.

Eine Treibseite (unten in Fig. 3) des Aufzugtragmittels 1 ist zum Kontakt mit dem Treibrad 20 und der Gegengewichtstragrolle 21.1 vorgesehen. Sie weist hierzu zwei Treibrippen in Form von Keilrippen 3 auf, die, wie in Fig. 3 gezeigt, in zugeordnete Rillen 20.1 des Treibrades 20 eingreifen und durch diese seitlich geführt werden. Hierdurch erhöht sich vorteilhaft der Anpressdruck und damit die Traktionsfähigkeit des Antriebs.

Eine Umlenkseite (oben in Fig. 4) des Aufzugtragmittels 1 ist zum Kontakt mit den Kabinentragrollen 21.2, 21.3 vorgesehen und weist hierzu eine Führungsrippe in Form einer Keilrippe 4 auf, die, wie in Fig. 4 gezeigt, in eine zugeordnete Rille 21.5 des Umlenkrades 21.3 eingreift und durch diese seitlich geführt wird.

In Fig. 2 sind die Massgrössen des Aufzugtragmittels 1 schematisch gezeigt. Dabei ist die Flankenhöhe h3 bzw. h4 einer Treibrippe 3 bzw. der Führungsrippe 4 die Projektion der Rippe auf die Medianebene des Aufzugtragmittels 1, die durch dessen Längs- und Hochachse aufgespannt wird (vertikal in Fig. 2). Die Gesamthöhe h1 des Aufzugtragmittels 1 setzt sich damit aus den Flankenhöhen h3, h4 der Treib- und Führungsrippe 3, 4 und der Höhe h2 des Grundkörpers 2 zusammen. Aufgrund der grossen Flankenhöhe t4 ist diese Gesamthöhe h1 grösser als die Breite w des Aufzugtragmittels 1, was vorteilhaft dessen Biegesteifigkeit um seine Querachse vergrössert und so einem Verklemmen in Rillen 20.1 oder 21.5 entgegenwirkt. Im Ausführungsbeispiel beträgt das Verhältnis w/h1 = 0,906.

Die Flankenbreite t3 bzw. t4 einer Treibrippe 3 bzw. der Führungsrippe 4 ist entsprechend die Projektion der Rippe auf den Grundkörper 2 des Aufzugtragmittels 1, i.e. senkrecht zur Flankenhöhe (horizontal in Fig. 2). Die Gesamtbreite ist mit w bezeichnet. Die Breite einer Rippe ergibt sich aus ihren beiden Flankenbreiten t sowie der Breite einer (abgeflachten) Spitze. So beträgt die Breite einer Treibrippe 3 beispielsweise 2 x t3 + d3 (vgl. Figuren 2, 3).

Der Flankenwinkel α4 der Führungsrippe 4 ist der Innenwinkel zwischen den beiden Flanken der Führungsrippe 4 und beträgt im Ausführungsbeispiel 80°. Der entsprechend definierte Flankenwinkel α3 der Treibrippen 3 beträgt im Ausführungsbeispiel 90°.

Wie in Fig. 2 erkennbar, ist die Flankenhöhe h4 der einen Führungsrippe 4 grösser als die Flankenhöhe h3 der beiden Treibrippen 3. Dadurch kann, wie der Vergleich der Figuren 3 und 4 zeigt, die Führungsrippe 4 tiefer in eine zugeordnete Rille 21.5 im Umlenkrad 21.3 eintauchen als dies bei den Treibrippen 3 und den zugeordneten Rillen 20.1 des Treibrades 20 der Fall ist. Daher verbleibt die Führungsrippe 4 bei einem radialen Abheben (nach unten in Fig. 4), das sich beispielsweise bei Tragmittellose aufgrund des Eigengewichts des Aufzugtragmittels 1 einstellen kann, länger in der Rille 21.5 und zentriert das Aufzugtragmittel 1 nach dessen Spannen selbsttätig wieder auf dem Umlenkrad 21.3. Auf der anderen Seite ist der maximale Abstand der Zugträger 5 zur Treibseite geringer, so dass sich eine homogenere Kraftverteilung in den Treibrippen 3 einstellt.

Wie ebenfalls in Fig. 2 erkennbar, ist auch die Flankenbreite t4 der Führungsrippe 4 grösser als die Flankenbreite t3 der beiden Treibrippen 3. Wandert das Aufzugtragmittel auf einem Rad 20, 21 um maximal seine Flankenbreite t nach aussen ab, so wird es durch die schrägen Flanken zurückgestellt. Durch die grössere Flankenbreite t4 wird damit das Aufzugtragmittel 1 auf seiner Umlenkseite über einen weiteren Bereich in Querrichtung geführt. Dies gestattet insbesondere auch einen stärkeren Schrägzug, da auch ein schräger einlaufendes Aufzugtragmittel aufgrund seiner grösseren Flankenbreite noch durch die entsprechende Rille 21.5 des Umlenkrades "gefangen" wird.

Dies ist besonders günstig, da aufgrund von Montagetoleranzen bei den Umlenkrädern 21.2, 21.3 sowie deren geringen Abstand zueinander ein stärkerer Schrägzug auftreten kann, dem die verbesserte Führung auf der Umlenkseite entgegenwirkt. Auch zwischen dem Umlenkrad 21.3 und dem Riemenfixpunkt 14.2 können grössere Toleranzen akzeptiert werden, da die breitere und höhere Führungsrippe 4 einen grösseren Schrägzug zulässt.

Zwischen Treibrad 20 und Umlenkrad 21.2 kann ein solcher Schrägzug durch Verformung des Aufzugtragmittels teilweise kompensiert werden, so dass die kürzeren und schmäleren Treibrippen 3 mit geringerem Schrägzug in das Treibrad 20 einlaufen.

Den beiden Treibrippen 3 ist eine Führungsrippe 4 zugeordnet, die sich im Wesentlichen über die gesamte Breite w des Aufzugtragmittels 1 erstreckt und damit in etwa doppelt so breit wie die beiden Treibrippen 3 ist. Um die Eintauchtiefe weiter zu erhöhen, ist der Flankenwinkel α4 der Führungsrippe 4 mit 80° spitzer ausgebildet als der Flankenwinkel α3 der Treibrippen 3.

Insgesamt weist damit die Führungsrippe 4 eine deutlich grössere Flankenfläche f4 = √(t4² + h4²) auf als die Treibrippen 3 mit f3 = √(t3² + h3²), was die Führung auf der Umlenkseite deutlich verbessert. Auf der anderen Seite sind die Zugträger 5 nahe an der Treibseite angeordnet, wobei aufgrund des flacheren Flankenwinkels α3 der Abstand zur Treibseite nur weniger variiert. Da zudem jeder Treibrippe 3 zwei Zugträger 5 zugeordnet sind, können Reibkräfte vom Treibrad 20 im Wesentlichen über je eine Flanke einer Treibrippe 3 auf einen zugeordneten Zugträger 5 übertragen werden, was eine besonders homogene Kraftverteilung in den Treibrippen bewirkt.

Wie in Fig. 3 schematisch angedeutet, ist die abgeflachte Spitze einer Treibrippe 3, die eine Breite d3 aufweist, welche Breite d3 gleich breit oder breiter als der minimale Abstand d20 der beiden Gegenflanken der Rille 20.1 im Treibrad 20 ist. Dadurch berührt die in diesen Gegenflanken ausgebildete Kante, in der die schrägen Gegenflanken in eine rechteckige Nut im Rillengrund übergehen, die Flanken der Treibrippen 3 nicht, so dass diese vor einer entsprechenden Kerbwirkung geschützt ist. Entsprechendes gilt für die Führungsrippe 4 und die ihr zugeordnete Rille 21.5, wie in Fig. 4 erkennbar.

Auf der anderen Seite gehen die Gegenflanken benachbarter Rillen 20.1 des Treibrades mit einem Radius R20 ineinander über, der grösser als ein Radius R3 ist, mit dem einander zugewandte Flanken der benachbarten Treibrippen 3 ineinander übergehen. Damit erfolgt der Kontakt zwischen den Flanken der Treibrippen 3 und den Gegenflanken der Rillen 20.1 sanft und ohne grosse Kerbwirkungen.

Die Treibseite kann wenigstens in den Bereichen ihrer Keilrippen 3, die mit den Flanken des Treibrades 20 in Reibschluss treten, eine Beschichtung (nicht dargestellt) mit einer PA-Folie aufweisen. Vorteilhaft ist die gesamte Treibseite in einem kontinuierlichen oder diskontinuierlichen Verfahren beschichtet, was die Herstellung vereinfacht. Alternativ zur Beschichtung kann auch eine Bedampfung und/oder eine Beflockung vorgesehen sein. Die Bedampfung ist beispielsweise eine Metallbedampfung. Die Beflockung ist beispielsweise eine Beflockung mit kurzen Kunst- oder Naturfasern. Auch diese Bedampfung oder Beflockung kann sich über die gesamte Treibseite erstrecken und in kontinuierlichen oder diskontinuierlichen Verfahren erfolgen. Prinzipiell ist es bei Paarungen von Keilrippen und Rillen, bei denen nur die Flanken der Keilrippen reibschlüssig an den Rillen anliegen, auch möglich, nur diese Flanken der Keilrippen mit einer Beschichtung oder Bedampfung und/oder Beflockung zu versehen, so dass die Bereiche zwischen den Rippenflanken die nicht im Kontakt mit dem Treibrad 20 stehen, unbeschichtet sind. Weiter besteht die Möglichkeit, die Rippe 4 mit einer reibwert- und/oder geräuschmindernden Beschichtung zu versehen.

Wie in den Figuren 3, 4 strichliniert angedeutet, sind neben dem Aufzugtragmittel ein oder mehrere weitere, bevorzugt baugleiche Aufzugtragmittel angeordnet und voneinander um einen Spalt 23 beabstandet, der ausreicht, eine gegenseitige Berührung der Aufzugtragmittel auf dem Treib- oder den Umlenkrädern zu verhindern, auch wenn sich die Aufzugtragmittel verformen. Durch einen solchen Aufzugtragmittelverbund kann vor Ort eine beliebige Breite einfach und rasch aus schmalen, leicht zu handhabenden einzelnen Aufzugtragmitteln zusammengesetzt werden, was die Herstellung und Lagerhaltung, den Transport und die (De)Montage deutlich vereinfacht. Aufgrund der Ausbildung mit zwei Treibrippen 3, denen die vier Zugträgern 5 zugeordnet sind, kann durch Hinzufügen einzelner Aufzugtragmittel die Gesamttragkraft des Aufzugtragmittelverbunds fein abgestuft angepasst werden. Durch die schmalen einzelnen Aufzugtragmittel kann vermieden werden, dass ein Aufzugtragmittelverbund mit n Aufzugtragmitteln durch ein weiteres breites Aufzugtragmittel (n+1) um eine entsprechend grosse Tragkraftstufe verstärkt und damit deutlich überdimensioniert werden muss, wenn die von n Aufzugtragmitteln zur Verfügung gestellte Tragkraft die erforderliche Gesamttragkraft nur geringfügig unterschreitet.

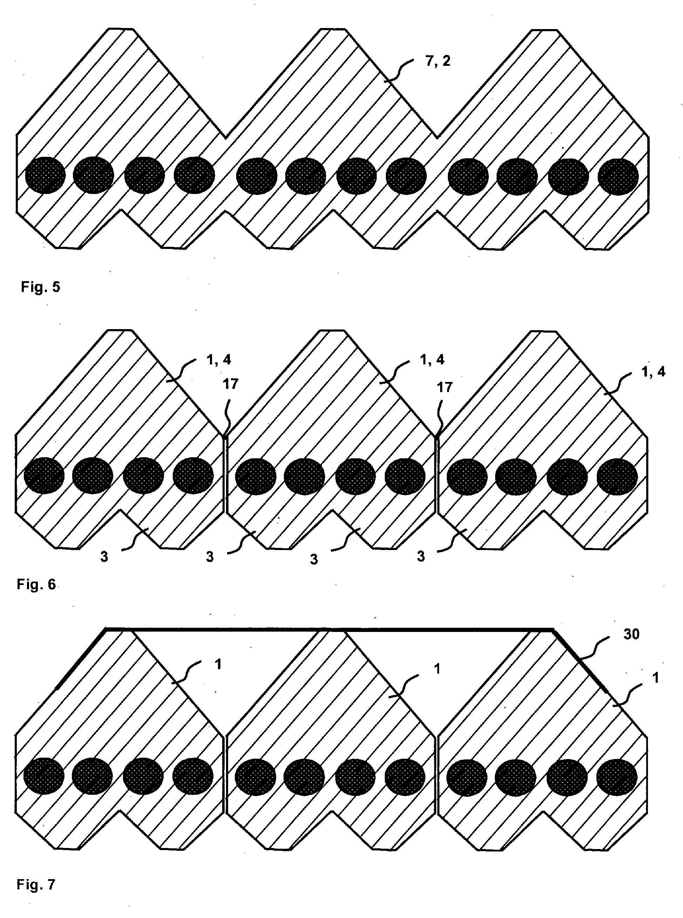

Zur Montage eines solchen Aufzugtragmittelverbunds können die Aufzugtragmittel 1 wie in den Fig. 5 und 6 gezeigt, aus einem Vorprodukt 7 hergestellt werden. Das Vorprodukt 7 besteht aus zwei oder mehr Aufzugtragmitteln 1 mit einstückigem Grundkörper 2. Das Vorprodukt 7 wird zwischen Treibrippen 3 und/oder Führungsrippen 4 teilweise aufgetrennt, so dass Aufzugstragmittel über mindestens einen dünnen Grundkörper-Steg 17 verbunden bleiben, bevor sie im Aufzugsystem montiert werden. Gemäss der Ausführung der Fig. 6 sind drei Aufzugtragmittel 1 über zwei Grundkörper-Stege 17 miteinander verbunden. Die Grundkörper-Stege 17 können wie in Fig. 6 gezeigt auf der Umlenkseite der Aufzugtragmittel 1 angebracht sein, so dass die Treibseite der einzelnen Aufzugtragmittel 1 auch im Verbund frei zugänglich sind. Insbesondere lassen sich die einzelnen Aufzugtragmittel 1 im Verbund über ihre Treibseite in entsprechende Rillen des Treibrades 20 legen. Dabei können die Grundkörper-Stege 17 auch den richtigen seitlichen Abstand 23 der Aufzugtragmittel 1 zueinander auf dem Treibrad 20 garantieren. Hierzu sind die Aufzugtragmittel 1 in seitlichen Montageabständen zueinander über die Grundkörper-Stege 17 verbunden, welche im Wesentlichen den seitlichen Abständen 23 der einzelnen Aufzugtragmittel 1 auf dem Treibrad 20 entsprechen. Nach erfolgter Montage können die Grundkörper-Stege 17 reissen, beispielsweise in dem die Grundkörper-Stege 17 geringfügig kürzer als die seitlichen Abstände 23 der Aufzugtragmittel 1 auf dem Treibrad 20 sind und die Grundkörper-Stege 17 unter der entstehenden Spannung kontrolliert reissen. Natürlich ist es auch möglich die Grundkörper-Stege 17 auf der Treibseite der Aufzugtragmittel 1 vorzusehen.

Alternativ können zu Montage eines solchen Aufzugtragmittelverbunds auch wie in Fig. 7 gezeigt, mehrere Aufzugtragmittel 1 über ein Montageband 30 miteinander verbunden werden. Das Montageband 30 umgibt die Aufzugtragmittel 1 zumindest teilweise. Beispielsweise bilden zwei, drei, vier, sechs oder acht Aufzugtragmittel einen teilweise von Montageband 30 umgebenen Verbund, der als Schlaufe aufgerollt einfach und problemlos in den Aufzugsschacht 12 transportierbar ist. Das Montageband 30 ist beispielsweise reversibel oder irreversibel stoffschlüssig an Aufzugtragmitteln 1 fixiert. Vorteilhafterweise ist es ein dünnes Kunststoffband mit einseitiger Klebeschicht. Das Kunststoffband ist über die Klebeschicht mit den Aufzugtragmitteln 1 verbunden. Bei reversiblem Stoffschluss lässt sich das Klebeband von den Aufzugtragmitteln 1 abziehen und die gelösten Aufzugtragmittel so vereinzeln. Vorteilhafterweise ist das Montageband 30 auf der Umlenkseite der Aufzugtragmittel angebracht, so dass die Treibseite der einzelnen Aufzugtragmittel 1 auch im Verbund frei zugänglich sind. Insbesondere lassen sich die einzelnen Aufzugtragmittel 1 im Verbund über ihre Treibseite in entsprechende Rillen des Treibrades 20 legen. Dabei kann das Montageband 30 auch den richtigen seitlichen Abstand 23 der Aufzugtragmittel 1 zueinander auf dem Treibrad 20 garantieren. Hierzu sind die Aufzugtragmittel 1 in seitlichen Montageabständen zueinander mit dem Montageband 30 verbunden, welche im Wesentlichen den seitlichen Abständen 23 der einzelnen Aufzugtragmittel 1 auf dem Treibrad 20 entsprechen. Natürlich ist es auch möglich, das Montageband 30 auf der Treibseite der Aufzugtragmittel 1 anzubringen.

## Patentansprüche

1. Aufzugtragmittel (1) für ein Aufzugsystem, mit einem Grundkörper (2), einer Treibseite mit wenigstens einer Treibrippe (3), einer der Treibseite gegenüberliegenden Umlenkseite mit wenigstens einer Führungsrippe (4), und einer in dem Grundkörper angeordneten Zugträgeranordnung (5), wobei der Abstand der Zugträgeranordnung (5) zur Treibseite geringer ist als zur Umlenkseite und die wenigstens eine Führungsrippe (4) mindestens eines der folgenden Merkmale zeigt:
a) einen Flankenwinkel (α4), der kleiner ist als der Flankenwinkel (α3) der wenigstens einen Treibrippe (3);
b) eine Flankenbreite (t4), die grösser ist als die Flankenbreite (t3) der wenigstens einen Treibrippe (3);
c)eine Flankenhöhe (h4), die grösser ist als die Flankenhöhe (h3) der wenigstens einen Treibrippe (3);
d) eine Flankenhöhe (h4), deren Verhältnis (h4/w) zur Breite (w) des Aufzugtragmittels (1) wenigstens 0,4 beträgt.

2. Aufzugtragmittel nach Anspruch 1, **dadurch gekennzeichnet, dass** jede Führungsrippe (4) mindestens eines der folgenden Merkmale zeigt:
a) einen kleineren Flankenwinkel (α4) als jede Treibrippe (3);
b) eine grössere Flankenbreite (t4) als jede Treibrippe (3);
c) eine grössere Flankenhöhe (h4) als jede Treibrippe (3);
d) eine Flankenhöhe (h4), deren Verhältnis (h4/w) zur Breite (w) des Aufzugtragmittels (1) wenigstens 0,4 beträgt;
e) höchstens drei ihr zugeordnete Treibrippen (3).

3. Aufzugtragmittel nach Anspruch 1 oder 2, **dadurch gekennzeichnet, dass** das Verhältnis (h4/h3) der Flankenhöhe (h4) wenigstens einer, bevorzugt jeder Führungsrippe (4) zur Flankenhöhe (h3) wenigstens einer, bevorzugt jeder Treibrippe (3) wenigstens 1,5 beträgt.

4. Aufzugtragmittel nach einem der vorhergehenden Ansprüche, **dadurch gekennzeichnet, dass** das Verhältnis (t4/t3) der Flankenbreite (t4) wenigstens einer, bevorzugt jeder Führungsrippe (4) zur Flankenbreite (t3) wenigstens einer, bevorzugt jeder Treibrippe (t3) wenigstens 1,5 beträgt.

5. Aufzugtragmittel nach einem der vorhergehenden Ansprüche, **dadurch gekennzeichnet, dass** das Verhältnis (w/h1) der Breite (w) des Aufzugtragmittels (1) zur Höhe (h1) des Aufzugtragmittels höchstens 0,95 beträgt.

6. Aufzugtragmittel nach einem der vorhergehenden Ansprüche, **dadurch gekennzeichnet, dass** die Treibseite zwei oder drei Treibrippen (3) und die Umlenkseite eine Führungsrippe (4) aufweist.

7. Aufzugtragmittel nach einem der vorhergehenden Ansprüche, **dadurch gekennzeichnet, dass** wenigstens eine, bevorzugt jede Treibrippe (3) als Keilrippe mit einem Flankenwinkel (α3) zwischen 60° und 120° ausgebildet ist.

8. Aufzugtragmittel nach einem der vorhergehenden Ansprüche, **dadurch gekennzeichnet, dass** wenigstens eine, bevorzugt jede Führungsrippe (4) als Keilrippe mit einem Flankenwinkel (α4) zwischen 60° und 100° ausgebildet ist.

9. Aufzugtragmittel nach einem der vorhergehenden Ansprüche, wobei das Aufzugstragmittel vorgesehen ist, um mit einem Treibrad eines Aufzugsystems zusammenzuwirken und daher abgestimmt auf das Treibrad derart ausgebildet ist, dass die minimale Breite (d3) wenigstens einer, bevorzugt jeder Treibrippe (3) gleich gross oder grösser als die minimale Breite (d20) einer zugeordneten Rille (20.1) des im Aufzugsystem vorgesehenen Treibrades (20) ist.

10. Aufzugtragmittel nach einem der vorhergehenden Ansprüche, wobei das Aufzugstragmittel vorgesehen ist, um mit einem Treibrad eines Aufzugsystems zusammenzuwirken und daher abgestimmt auf das Treibrad derart ausgebildet ist, dass zwischen wenigstens zwei, bevorzugt zwischen allen benachbarten Treibrippen (3) eine Rille mit einem Radius (R3) ausgebildet ist, wobei das Verhältnis (R3/R20) dieses Radius' (R3) zu einem Radius (R20), der auf einer zugeordneten Rippe (20.1) des im Aufzugsystem vorgesehenen Treibrades ausgebildet ist, kleiner 1 ist.

11. Aufzugtragmittel nach einem der vorhergehenden Ansprüche, **dadurch gekennzeichnet, dass** der Grundkörper (2), wenigstens eine, bevorzugt jede Treibrippe (3) und/oder wenigstens eine, bevorzugt jede Führungsrippe (4) ein- oder mehrstückig miteinander aus einem Elastomer, insbesondere Polyurethan (PU), Polychloropren (CR), Naturkautschuk und/oder Ethylen-Propylen-Dien-Kautschuk (EPDM) ausgebildet sind.

12. Aufzugtragmittel nach einem der vorhergehenden Ansprüche, **dadurch gekennzeichnet, dass** die Treibseite und/oder die Umlenkseite eine Auflage oder Beschichtung aufweist, deren Reibwert, Härte und/oder Abriebfestigkeit sich von dem Grundkörper unterscheidet.

13. Aufzugtragmittel nach einem der vorhergehenden Ansprüche, **dadurch gekennzeichnet, dass** eine Gruppe mit wenigstens einer, bevorzugt allen Treibrippen (3) und eine Gruppe mit wenigstens einer, bevorzugt allen Führungsrippe (4) mehrstückig miteinander ausgebildet sind, wobei die Gruppe der Treibrippen eine geringere Härte, insbesondere eine geringere Shore-Härte und/oder einen grösseren Reibwert als die Gruppe der Führungsrippen aufweist.

14. Aufzugtragmittel nach einem der vorhergehenden Ansprüche, **dadurch gekennzeichnet, dass** wenigstens einer, bevorzugt jeder Treibrippe (3) wenigstens ein, bevorzugt zwei Zugträger (5) zugeordnet sind.

15. Aufzugtragmittel nach einem der vorhergehenden Ansprüche, **dadurch gekennzeichnet, dass** der Durchmesser der Zugträger (5) im Bereich von 1,5 bis 4 mm liegt.

16. Aufzugtragmittel nach einem der vorhergehenden Ansprüche, **dadurch gekennzeichnet, dass** die Rippen als Keilrippen ausgebildet sind und insbesondere die wenigstens eine Führungsrippe (4) eine Flankenfläche f4 = √(t4² + h4²) aufweist, die grösser ist als die Flankenfläche f3 = √(t3² + h3²) der wenigstens einen Treibrippe (3).

17. Aufzugtragmittel nach einem der vorhergehenden Ansprüche, **dadurch gekennzeichnet, dass** wenigstens ein, bevorzugt jeder Zugträger (5) der Zugträgeranordnung eine zweilagige Kemlitze mit einem Kemdraht und zwei um diesen geschlagenen Drahtlagen und um die Kemlitze angeordnete einlagige Aussenlitzen mit einem Kemdraht und einer um diesen geschlagenen Drahtlage umfasst.

18. Aufzugtragmittel nach Anspruch 17, **dadurch gekennzeichnet, dass** die zwei Drahtlagen der Kemlitze denselben Schlagwinkel aufweisen, die eine Drahtlage der Aussenlitzen entgegen der Schlagrichtung der Kernlitze geschlagen ist, und die Aussenlitzen entgegen der Schlagrichtung ihrer eigenen Drahtlage um die Kemlitze geschlagen sind.

19. Aufzugsystem mit einer Kabine (10), einem damit verbundenen Aufzugtragmittel (1) nach einem der vorhergehenden Ansprüche und einem Treibrad (20), das mit der Treibseite des Aufzugtragmittels (1) reibschlüssig zusammenwirkt, um die Kabine (10) zu verfahren, wobei jeder Treibrippe (3) des Aufzugtragmittels (1) wenigstens eine Rille (20.1) auf dem Treibradumfang zugeordnet ist und der Durchmesser des Treibrades vorzugsweise kleiner oder gleich 220mm ist.

20. Aufzugsystem nach Anspruch 19, **dadurch gekennzeichnet, dass** zum Verfahren der Kabine (10) mehrere Aufzugtragmittel (1) nach einem der vorhergehenden Ansprüche 1 bis 18 vorgesehen sind, wobei jedes Aufzugtragmittel (1) das Treibrad (20) mit seiner Treibseite und wenigstens ein Umlenkrad (21) mit seiner Umlenkseite wenigstens teilweise umschlingt, wobei jeder Treibrippe (3) jedes Aufzugtragmittels (1) wenigstens eine Rille (20.1) auf dem Treibradumfang zugeordnet ist, und wobei jeder Führungsrippe (4) jedes Aufzugtragmittels wenigstens eine Rille (21.5) auf dem wenigstens einen Umlenkradumfang zugeordnet ist.

21. Aufzugsystem nach Anspruch 20, **dadurch gekennzeichnet, dass** zwei Aufzugtragmitteln (1) durch einen Spalt (23) voneinander beabstandet sind, der vorzugsweise wenigstens 3% der Breite eines Aufzugtragmittels (1) beträgt.

22. Verfahren zur Montage eines Aufzugtragmittels (1) in einem Aufzugsystem nach einem der Ansprüche 19 bis 21, **dadurch gekennzeichnet, dass** ein Vorprodukt (7) aus zwei oder mehr Aufzugtragmitteln (1) mit einstückigem Grundkörper (2) zwischen Treibrippen (3) und/oder Führungsrippen (4) teilweise aufgetrennt wird, und dass die Aufzugstragmittel (1) über mindestens einen dünnen Grundkörper-Steg (17) verbunden bleiben, bevor sie im Aufzugsystem montiert werden, der für den Betrieb des Aufzugssystems getrennt wird.

23. Verfahren zur Montage eines Aufzugtragmittels (1) in einem Aufzugsystem nach einem der Ansprüche 19 bis 21, **dadurch gekennzeichnet, dass** wenigstens zwei Aufzugtragmittel (1) dauerhaft oder lösbar mit einem Montageband (30) verbunden werden, bevor sie im Aufzugsystem montiert werden, das für den Betrieb des Aufzugssystems getrennt wird.

## Claims

1. Lift support means (1) for a lift system, with a base body (2), a drive side with at least one drive rib (3), a deflecting side, which is opposite the drive side, with at least one guide rib (4) and a tensile carrier arrangement (5) arranged in the base body, wherein the spacing of the tensile carrier arrangement (5) from the drive side is less than from the deflecting side, and the at least one guide rib (4) has at least one of the following features:
a) a flank angle (α4) which is smaller than the flank angle (α3) of the at least one drive rib (3);
b) a flank width (t4) which is greater than the flank width (t3) of the at least one drive rib (3);
c) a flank height (h4) which is greater than the flank height (h3) of the at least one drive rib (3); and
d) a flank height (h4) of which the ratio (h4/w) to the width (w) of the lift support means (1) is at least 0.4.

2. Lift support means according to claim 1, **characterised in that** each guide rib (4) has at least one of the following features:
a) a smaller flank angle (α4) than each drive rib (3);
b) a greater flank width (t4) than each drive rib (3);
c) a greater flank height (h4) than each drive rib (3);
d) a flank height (h4) of which the ratio (h4/w) to the width (w) of the lift support means (1) is at least 0.4; and
e) at most three drive ribs (3) associated therewith.

3. Lift support means according to claim 1 or 2, **characterised in that** the ratio (h4/h3) of the flank height (h4) of at least one, preferably each, guide rib (4) to the flank height (h3) of at least one, preferably each, drive rib (3) is at least 1.5.

4. Lift support means according to either one of the preceding claims, **characterised in that** the ratio (t4/t3) of the flank width (t4) of at least one, preferably each, guide rib (4) to the flank width (t3) of at least one, preferably each, drive rib (t3) is at least 1.5.

5. Lift support means according to any one of the preceding claims, **characterised in that** the ratio (w/h1) of the width (w) of the lift support means (1) to the height (h1) of the lift support means is at most 0.95.

6. Lift support means according to any one of the preceding claims, **characterised in that** the drive side has two or three drive ribs (3) and the deflecting side has one guide rib (4).

7. Lift support means according to any one of the preceding claims, **characterised in that** at least one, preferably each, drive rib (3) is formed as a wedge rib with a flank angle (α3) between 60° and 120°.

8. Lift support means according to any one of the preceding claims, **characterised in that** at least one, preferably each, guide rib (4) is formed as a wedge rib with a flank angle (α) between 60° and 100°.

9. Lift support means according to any one of the preceding claims, wherein the lift support means is provided in order to co-operate with a drive wheel of a lift system and is therefore constructed to be matched to the drive wheel in such a manner that the minimum width (d3) of at least one, preferably each, drive rib (3) is of the same size as or greater than the minimum width (d20) of an associated groove (20.1) of the drive wheel (20) provided in the lift system.

10. Lift support means according to any one of the preceding claims, wherein the lift support means is provided in order to co-operate with a drive wheel of a lift system and is therefore constructed to be matched to the drive wheel in such a manner that a groove with a radius (R3) is formed between at least two, preferably between all, adjacent drive ribs (3), wherein the ratio (R3/R20) of this radius (R3) to a radius (R20) formed on an associated rib (20.1) of the drive wheel (20) provided in the lift system is less than 1.

11. Lift support means according to any one of the preceding claims, **characterised in that** the base body (2) of at least one, preferably each, drive rib (3) and/or at least one, preferably each, guide rib (4) is or are of unitary or multi-part construction from an elastomer, particularly polyurethane (PU), polychloroprene (CR), natural rubber and/or ethylene-propylene-diene rubber (EPVM).

12. Lift support means according to any one of the preceding claims, **characterised in that** the drive side and/or the deflecting side has or have a covering or coating of which the coefficient of friction, hardness and/or abrasion resistance differs or differ from the base body.

13. Lift support means according to any one of the preceding claims, **characterised in that** a group with at least one, preferably all, drive ribs (3) and a group with at least one, preferably all, guide ribs (4) are of multi-part construction, wherein the group of drive ribs has a lesser hardness, particularly a lesser Shore hardness, and/or a greater coefficient of friction than the group of guide ribs.

14. Lift support means according to any one of the preceding claims, **characterised in that** at least one tensile carrier (5), preferably two tensile carriers (5), is or are associated with at least one, preferably each, drive rib (3).

15. Lift support means according to any one of the preceding claims, **characterised in that** the diameter of the tensile carriers (5) is in the region of 1.5 to 4 millimetres.

16. Lift support means according to any one of the preceding claims, **characterised in that** the ribs are constructed as wedge ribs and, in particular, the at least one guide rib (4) has a flank area f4 = √(t4² + h4²) which is greater than the flank area f3 = √(t3² + h3²) of the at least one drive rib (3).

17. Lift support means according to any one of the preceding claims, **characterised in that** at least one, preferably each, tensile carrier (5) of the tensile carrier arrangement comprises a double-ply core strand with a core wire and two wire layers wrapped around this and single-ply outer strands, which are arranged around the core strand, with a core wire and a wire layer wrapped around this.

18. Lift support means according to claim 17, **characterised in that** the two wire layers of the core strand have the same angle of wrap, the one wire layer of the outer strands is wrapped opposite to the wrap direction of the core strand, and the outer strands are wrapped opposite to the wrap direction of their own wire layer around the core strand.

19. Lift system with a cage (10), a lift support means (1) connected therewith according to any one of the preceding claims and a drive wheel (20) which co-operates in friction-coupling manner with the drive side of the lift support means (1) in order to move the cage (10), wherein each drive rib (3) of the lift support means (1) is assigned to at least one groove (20.1) on the drive wheel circumference and the diameter of the drive wheel is preferably less than or equal to 220 millimetres.

20. Lift system according to claim 19, **characterised in that** several lift support means (1) according to any one of the preceding claims 1 to 18 are provided for moving the cage (10), wherein each lift support means (1) at least partly loops around the drive wheel (20) by its drive side and at least partly loops around one deflecting wheel (21) by its deflecting side, wherein each drive rib (3) of each lift support means (1) is assigned to at least one groove (20.1) on the drive wheel circumference and wherein each guide rib (4) of each lift support means is assigned to at least one groove (21.5) on the at least one deflecting wheel circumference.

21. Lift system according to claim 20, **characterised in that** two lift support means (1) are spaced apart by a gap (23), which is preferably at least 3% of the width of a lift support means (1).

22. Method of mounting a lift support means (1) in a lift system according to any one of claims 19 to 21, **characterised in that** a pre-product (7) consisting of two or more lift support means (1) with integral base body (2) is partly divided between drive ribs (3) and/or guide ribs (4) and that the lift support means (1) remain connected by way of at least one thin base body bridge (17) before they are mounted in the lift system.

23. Method of mounting a lift support means (1) in a lift system according to any one of claims 19 to 21, **characterised in that** at least two lift support means (1) are permanently or detachably connected with an assembly band (30) before they are mounted in the lift system, which band is separated for the operation of the lift system.

## Revendications

1. Élément porteur d'ascenseur (1) pour un système d'ascenseur, avec un corps de base (2), un côté d'entraînement avec au moins une nervure d'entraînement (3), un côté de déviation, opposé au côté d'entraînement, avec au moins une nervure de guidage (4), et un dispositif à éléments de traction (5) disposé dans le corps de base, la distance qui sépare le dispositif à éléments de traction (5) et le côté d'entraînement étant inférieure à la distance qui le sépare du côté de déviation, et la ou les nervures de guidage (4) présentant l'une au moins des propriétés suivantes :
a) un angle de flancs (α4) qui est inférieur à l'angle de flancs (α3) de la ou des nervures d'entraînement (3) ;
b) une largeur de flanc (t4) qui est supérieure à la largeur de flanc (t3) de la ou des nervures d'entraînement (3) ;
c) une hauteur de flanc (h4) qui est supérieure à la hauteur de flanc (h3) de la ou des nervures d'entraînement (3) ;
d) une hauteur de flanc (h4) dont le rapport (h4/w) sur la largeur (w) de l'élément porteur d'ascenseur (1) est d'au moins 0,4.

2. Élément porteur d'ascenseur selon la revendication 1, **caractérisé en ce que** chaque nervure de guidage (4) présente l'une au moins des propriétés suivantes :
a) un plus petit angle de flancs (α4) que chaque nervure d'entraînement (3) ;
b) une plus grande largeur de flanc (t4) que chaque nervure d'entraînement (3) ;
c) une plus grande hauteur de flanc (h4) que chaque nervure d'entraînement (3) ;
d) une hauteur de flanc (h4) dont le rapport (h4/w) sur la largeur (w) de l'élément porteur d'ascenseur (1) est d'au moins 0,4 ;
e) au maximum trois nervures d'entraînement (3) qui lui sont associées.

3. Élément porteur d'ascenseur selon la revendication 1 ou 2, **caractérisé en ce que** le rapport (h4/h3) de la hauteur de flanc (h4) d'au moins une nervure de guidage (4), de préférence de chaque nervure de guidage (4), sur la hauteur de flanc (h3) d'au moins une nervure d'entraînement (3), de préférence de chaque nervure d'entraînement (3), est d'au moins 1,5.

4. Élément porteur d'ascenseur selon l'une au moins des revendications précédentes, **caractérisé en ce que** le rapport (t4/t3) de la largeur de flanc (t4) d'au moins une nervure de guidage (4), de préférence de chaque nervure de guidage (4), sur la largeur de flanc (t3) d'au moins une nervure d'entraînement (3), de préférence de chaque nervure d'entraînement (3), est d'au moins 1,5.

5. Élément porteur d'ascenseur selon l'une des revendications précédentes, **caractérisé en ce que** le rapport (w/h1) de la largeur (w) de l'élément porteur d'ascenseur (1) sur sa hauteur (h1) est au maximum de 0,95.

6. Élément porteur d'ascenseur selon l'une des revendications précédentes, **caractérisé en ce que** le côté d'entraînement présente deux ou trois nervures d'entraînement (3), et le côté de déviation une nervure de guidage (4).

7. Élément porteur d'ascenseur selon l'une des revendications précédentes, **caractérisé en ce qu'**au moins une nervure d'entraînement (3), de préférence chaque nervure d'entraînement (3), est conçue comme une nervure cunéiforme avec un angle de flancs (α3) situé entre 60° et 120°.

8. Élément porteur d'ascenseur selon l'une des revendications précédentes, **caractérisé en ce qu'**au moins une nervure de guidage (4), de préférence chaque nervure de guidage (4), est conçue comme une nervure cunéiforme avec un angle de flanc (α4) situé entre 60° et 100°.

9. Élément porteur d'ascenseur selon l'une des revendications précédentes, étant précisé que ledit élément porteur d'ascenseur est prévu pour coopérer avec une poulie d'entraînement d'un système d'ascenseur et est pour cette raison adapté à celle-ci de telle sorte que la largeur minimale (d3) d'au moins une nervure d'entraînement, de préférence de chaque nervure d'entraînement (3), soit égale ou supérieure à la largeur minimale (d20) d'une rainure associée (20.1) de la poulie d'entraînement (20) prévue dans le système d'ascenseur.

10. Élément porteur d'ascenseur selon l'une des revendications précédentes, étant précisé que ledit élément porteur d'ascenseur est prévu pour coopérer avec une poulie d'entraînement d'un système d'ascenseur et est pour cette raison adapté à celle-ci de telle sorte qu'il y ait entre au moins deux nervures d'entraînement (3) voisines, de préférence entre toutes les nervures (3) voisines, une rainure avec un rayon (R3), le rapport (R3/R20) de ce rayon (R3) sur un rayon (R20) qui est formé sur une nervure associée (20.1) de la poulie d'entraînement prévue dans le système d'ascenseur étant inférieur à 1.

11. Élément porteur d'ascenseur selon l'une des revendications précédentes, **caractérisé en ce que** le corps de base (2), au moins une nervure d'entraînement (3), de préférence chaque nervure d'entraînement (3), et/ou au moins une nervure de guidage (4), de préférence chaque nervure de guidage (4), sont réalisés d'une seule pièce ou en plusieurs parties à partir d'un élastomère, en particulier du polyuréthanne (PU), du polychloroprène (CR), du caoutchouc naturel et/ou du caoutchouc éthylène propylène diène (EPDM).

12. Élément porteur d'ascenseur selon l'une des revendications précédentes, **caractérisé en ce que** le côté d'entraînement et/ou le côté de déviation présentent une garniture ou un revêtement dont le coefficient de friction, la dureté et/ou la résistance à l'usure sont différents de ceux du corps de base.

13. Élément porteur d'ascenseur selon l'une des revendications précédentes, **caractérisé en ce qu'**un groupe comprenant au moins une nervure d'entraînement (3), de préférence toutes les nervures d'entraînement (3), et un groupe comprenant au moins une nervure de guidage (4), de préférence toutes les nervures de guidage (4), sont réalisés en plusieurs parties, le groupe de nervures d'entraînement présentant une dureté, en particulier une dureté Shore, inférieure et/ou un coefficient de friction supérieur au groupe de nervures de guidage.

14. Élément porteur d'ascenseur selon l'une des revendications précédentes, **caractérisé en ce qu'**au moins un et de préférence deux éléments de traction (5) sont associés à une nervure d'entraînement (3), de préférence à chaque nervure d'entraînement (3).

15. Élément porteur d'ascenseur selon l'une des revendications précédentes, **caractérisé en ce que** le diamètre des éléments de traction (5) est situé dans la plage de 1,5 à 4 mm.

16. Élément porteur d'ascenseur selon l'une des revendications précédentes, **caractérisé en ce que** les nervures sont conçues comme des nervures cunéiformes et en particulier la ou les nervures de guidage (4) présentent une surface de flanc f4=√(t4²+h4²) qui est plus grande que la surface de flanc f3=√(t3²+h3²) de la ou des rainures d'entraînement (3).

17. Élément porteur d'ascenseur selon l'une des revendications précédentes, **caractérisé en ce qu'**au moins un élément de traction (5), de préférence chaque élément de traction (5) du dispositif à éléments de traction, comprend un toron central à deux couches avec un fil central et deux couches de fil enroulées autour de celui-ci, et des torons extérieurs à une couche disposés autour du toron central, avec un fil central et une couche de fils enroulée autour de celui-ci.

18. Élément porteur d'ascenseur selon la revendication 17, **caractérisé en ce que** les deux couches de fils du toron central présentent le même angle d'enroulement, une couche de fils des torons extérieurs est enroulée en sens inverse par rapport au sens d'enroulement du toron central, et les torons extérieurs sont enroulés sur le toron central en sens inverse par rapport au sens d'enroulement de leur propre couche de fils.

19. Système d'ascenseur avec une cabine (10), un élément porteur d'ascenseur (1) selon l'une des revendications précédentes qui est relié à la cabine, et une poulie d'entraînement (20) qui coopère par friction avec le côté d'entraînement de l'élément porteur d'ascenseur (1) pour déplacer la cabine (10), au moins une rainure (20.1) prévue sur la circonférence de la poulie d'entraînement étant associée à chaque nervure d'entraînement (3) de l'élément porteur (1), et le diamètre de la poulie d'entraînement étant de préférence inférieur ou égal à 220 mm.

20. Système d'ascenseur selon la revendication 19, **caractérisé en ce qu'**il est prévu, pour déplacer la cabine (10), plusieurs éléments porteurs d'ascenseur (1) selon l'une des revendications précédentes 1 à 18, chaque élément porteur de cabine (1) s'enroulant au moins en partie sur la poulie d'entraînement (20), avec son côté d'entraînement, et sur au moins une poulie de déviation (21), avec son côté de déviation, au moins une rainure (20.1) prévue sur la circonférence de la poulie d'entraînement étant associée à chaque nervure d'entraînement (3) de chaque élément porteur d'ascenseur (1), et au moins une rainure (21.5) prévue sur la ou les circonférences de poulie de déviation étant associée à chaque nervure de guidage (4) de chaque élément porteur d'ascenseur.

21. Système d'ascenseur selon la revendication 20, **caractérisé en ce que** deux éléments porteurs d'ascenseur (1) sont espacés par un interstice (23) qui représente de préférence au moins 3% de la largeur d'un élément porteur d'ascenseur (1).

22. Procédé pour le montage d'un élément porteur d'ascenseur (1) dans un système d'ascenseur selon l'une des revendications 19 à 21, **caractérisé en ce qu'**un produit préfabriqué (7) composé de deux éléments porteurs d'ascenseur (1), ou plus, avec un corps de base (2) d'une seule pièce est partiellement sectionné entre des nervures d'entraînement (3) et/ou des nervures de guidage (4), et **en ce que** les éléments porteurs d'ascenseur (1) restent reliés, avant d'être montés dans le système d'ascenseur, par au moins une mince patte de corps de base (17) qui est coupée pour le fonctionnement du système d'ascenseur.

23. Procédé pour le montage d'un élément porteur d'ascenseur (1) dans un système d'ascenseur selon l'une des revendications 19 à 21, **caractérisé en ce qu'**au moins deux éléments porteurs d'ascenseur (1) sont reliés de manière durable ou amovible, avant d'être montés dans le système d'ascenseur, à une bande de montage (30) qui est séparée pour le fonctionnement dudit système d'ascenseur.
